# EUROPEAN PATENT SPECIFICATION

(11) **EP 3 315 631 B1**
(45) Date of publication and mention of the grant of the patent: **06.09.2023**
(21) Application number: 16814055.6
(22) Date of filing: 10.05.2016
(51) Int. Cl.: C23C 26/00, C08G 18/00, C08G 18/10, C08G 18/66, C09D 5/02, C09D 5/08, C09D 175/04, C08G 18/48, C08G 18/76, C08G 18/08, C08G 18/12, C09D 175/06, C09D 175/08, C08G 18/32, C08G 18/42

(54) **STEEL SHEET SURFACE TREATMENT AGENT AND STEEL SHEET WITH COATING FILM THEREOF**
MITTEL ZUR STAHLBLECHOBERFLÄCHENBEHANDLUNG UND STAHLBLECH MIT BESCHICHTUNGSFILM DARAUS
AGENT DE TRAITEMENT DE SURFACE DE TÔLE D'ACIER ET TÔLE D'ACIER DOTÉ D'UN FILM DE REVÊTEMENT CONSTITUÉ DE CE DERNIER

(30) Priority: 26.06.2015 JP 2015128829
(43) Date of publication of application: 02.05.2018
(73) Proprietor: DIC Corporation, Tokyo 174-8520 (JP)
(72) Inventor: MATSUOKA Ryuichi, Takaishi-shi Osaka 592-0001 (JP); OKA Yasutaka, Takaishi-shi Osaka 592-0001 (JP); NAGAHAMA Sadamu, Takaishi-shi Osaka 592-0001 (JP)
(74) Representative: Beckmann, Claus
(86) International application number: PCT/JP2016/063840
(87) International publication number: WO 2016/208284

(56) References cited:
- EP-A1- 2 868 626
- EP-B1- 2 877 508
- WO-A1-2014/045782
- WO-A1-2015/019899
- WO-A2-2014/204248
- JP-A- S6 136 314
- JP-A- 2013 023 611
- US-A- 5 817 733
- US-A1- 2002 111 424
- US-A1- 2003 083 428
- US-A1- 2012 016 075
- US-B1- 6 649 688

## Description

### TECHNICAL FIELD

The present invention relates to a steel sheet surface treatment agent which is used for the surface of various types of metal substrates, such as a zinc-plated steel sheet and an aluminum-zinc alloy steel sheet, and a steel sheet having a coating film of the steel sheet surface treatment agent.

### BACKGROUND ART

A steel sheet surface treatment agent is generally required to form a coating film which can prevent a metal substrate surface from deteriorating. Particularly in recent years, the industrial fields demand a steel sheet surface treatment agent to form a coating film having not only a warm water resistance and a solvent resistance but also a chemical resistance at such a level that the film can prevent the substrate from deteriorating due to the deposition of a chemical, such as a cleaning agent, acid rain, or the like.

The steel sheet surface treatment agent having the above-mentioned properties is often required especially in the application of surface protection for a metal substrate which is not rust resistant.

As the steel sheet surface treatment agent, for example, an aqueous resin composition for a metal surface treatment agent is known which contains an aqueous vinyl-modified epoxy ester resin and a carboxyl group-containing aqueous urethane resin, where the carboxyl group-containing aqueous urethane resin is a polyester urethane resin obtained by reacting a polyester polyol prepared from an acid component and a glycol component without carboxyl group; a polyisocyanate compound; and a chain extender that contains a glycol component with a carboxyl group (see, for example, PTL 1).

However, a coating film formed from the above-mentioned aqueous resin composition for metal surface treatment agent can not satisfactorily prevent deterioration of a metal substrate for a long term in respect of the chemical resistance and corrosion resistance. Particularly, the coating film cannot satisfactorily prevent a metal substrate rust from a practical point of view in some cases.

Under such circumstances, a steel sheet surface treatment agent exhibiting excellent heat yellowing resistance, chemical resistance, and corrosion resistance has been desired.

US 2012/016075 A1 describes a polyurethane dispersion and a method for producing the same. US 5,817,733 A describes polyurethane resins, processes for their preparation, and their use in water-dilutable coating compositions. US 6,649,688 A describes a coating composition comprising at least three components, including a component comprising at least one polyisocyanate dispersed or dissolved in one or more organic, optionally water dilutable solvents, it preparation and use. WO 2014/204248 A1 relates to a method of manufacturing a planarizing film having good functionality in terms of planarizing performance while having a thickness of about 10 µm or less by drawing a material having planarizing functionality such as a PVA-based resin, while preventing tearing or curling during a drawing process. EP 2 868 626 A1 describes polyurethane elastomer nanocomposites and a method of their manufacturing. US 2002/111424 A1 describes a method for preparing a water-based urethane resin composition. US 2003/083428 A1 describes a polymer dispersions suitable for reactive systems. EP 2 877 508 A1 describes aqueously dispersible polyurethanes. WO 2015/019899 A1 describes an aqueous resin composition, a laminate produced using same, and an image display device.

### CITATION LIST

### Patent Literature

[PTL 1] JP-A-2006-321911

### SUMMARY OF INVENTION

### TECHNICAL PROBLEM

An object of the present invention is to provide a steel sheet surface treatment agent which forms a coating film having excellent heat yellowing resistance, chemical resistance, corrosion resistance, and a capability of preventing deterioration of various types of metal substrates.

### SOLUTION TO PROBLEM

The present inventors conducted extensive and intensive studies with a view toward solving the above-mentioned problems, and found that a steel sheet surface treatment agent containing an aqueous urethane resin, which is obtained by reacting a urethane prepolymer containing an aromatic polyisocyanate and a specific alcohol solvent as a terminator, forms a coating film that exhibits an excellent heat yellowing resistance, a chemical resistance, and a corrosion resistance and a capability of preventing deterioration of a metal substrate, thereby completing the present invention.

Specifically, the present invention is directed to a steel sheet surface treatment agent containing an aqueous urethane resin composition obtained by dispersing in (C) an aqueous medium a urethane resin obtained by reacting (A) a urethane prepolymer having an isocyanate group and (B) a terminator containing (b1) an alcohol solvent, wherein the urethane prepolymer (A) is obtained by reacting (a1) a polyol and (a2) a polyisocyanate containing an aromatic polyisocyanate, wherein the polyol (a1) includes a polyether polyol, wherein the alcohol solvent (b1) includes hexanol, heptanol, octanol, nonanol, undecanol, 1,2-propanediol, 1,3-propanediol, 1,2-butanediol, 1,3-butanediol, 1,4-butanediol, 2,3-butanediol, 1,2-pentanediol, 1,5-pentanediol, 1,2-hexanediol, or 1,6-hexanediol, wherein the boiling point of the alcohol solvent (b1) is in the range of from 150 to 350°C, wherein the number average molecular weight of the alcohol solvent (b1) is 500 or less, and wherein the content of the alcohol solvent (b1) is in the range of from 0.1 to 10 parts by mass relative to 100 parts by mass of the urethane prepolymer (A). The invention also provides a steel sheet comprising a coating film of the above steel sheet surface treatment agent. The invention further provides the method for producing an aqueous urethane resin composition defined in claim 6.

### ADVANTAGEOUS EFFECTS OF INVENTION

The steel sheet surface treatment agent of the present invention forms a coating film having very excellent heat yellowing resistance, chemical resistance, and corrosion resistance, and therefore can be used in the application of surface protection for various types of metal substrates. The examples of metal substrates for the application of the steel sheet surface treatment agent of the present invention include plated steel sheets such as a zinc-plated steel sheet and an aluminum-zinc alloy steel sheet; an aluminum sheet; an aluminum alloy sheet; an electrical steel sheet; a copper sheet; and a stainless steel sheet. The steel sheet surface treatment agent of the present invention forms a coating film with excellent corrosion resistance and prevents these metal substrates from rusting, and therefore the agent is advantageously used in various types of members such as building materials including an outer wall and roofing; civil engineering materials including a guardrail, a sound barrier and a drainage conduit; household appliances; industrial machines; and exterior automotive trims.

### DESCRIPTION OF EMBODIMENTS

The steel sheet surface treatment agent of the present invention contains an aqueous urethane resin composition which is obtained by dispersing in (C) an aqueous medium a urethane resin obtained by reacting (A) a urethane prepolymer having an isocyanate group and (B) a terminator containing (b1) an alcohol solvent, wherein the urethane prepolymer (A) is obtained by reacting (a1) a polyol and (a2) a polyisocyanate containing an aromatic polyisocyanate, wherein the polyol (a1) includes a polyether polyol, wherein the alcohol solvent (b1) includes hexanol, heptanol, octanol, nonanol, undecanol, 1,2-propanediol, 1,3-propanediol, 1,2-butanediol, 1,3-butanediol, 1,4-butanediol, 2,3-butanediol, 1,2-pentanediol, 1,5-pentanediol, 1,2-hexanediol, or 1,6-hexanediol, wherein the boiling point of the alcohol solvent (b1) is in the range of from 150 to 350°C, wherein the number average molecular weight of the alcohol solvent (b1) is 500 or less, and wherein the content of the alcohol solvent (b1) is in the range of from 0.1 to 10 parts by mass relative to 100 parts by mass of the urethane prepolymer (A).

With respect to the urethane prepolymer (A), a urethane prepolymer having an isocyanate group is used which is obtained by reacting a polyol (a1) and a polyisocyanate (a2) containing an aromatic polyisocyanate.

The polyol (a1) includes a polyether polyol and may further include a polyester polyol, a polycarbonate polyol, and a polyolefin polyol. A polyether polyol is used from the viewpoint of the ability to form a coating film with excellent alkali resistance. These polyols (a1) may be used individually or in combination.

Examples of the polyether polyol as the polyol (a1) include those obtained by subjecting alkylene oxide to addition polymerization using as an initiator one type or two or more types of compounds having two or more active hydrogen atoms.

Examples of the initiator include ethylene glycol, diethylene glycol, triethylene glycol, trimethylene glycol, 1,2-propanediol, 1,3-propanediol, 1,3-butanediol, 1,4-butanediol, 1,6-hexanediol, neopentyl glycol, glycerol, trimethylolethane, trimethylolpropane, sorbitol, sucrose, aconitic acid, trimellitic acid, hemimellitic acid, phosphoric acid, ethylenediamine, diethylenetriamine, triisopropanolamine, pyrogallol, dihydroxybenzoic acid, hydroxyphthalic acid, and 1,2,3-propanetrithiol.

Examples of the alkylene oxide include ethylene oxide, propylene oxide, butylene oxide, styrene oxide, epichlorohydrin, and tetrahydrofuran.

With respect to the polyether polyol, specifically, polyoxytetramethylene glycol formed by subjecting tetrahydrofuran to ring-opening is preferably used.

With respect to the polyether polyol, a polyether polyol having a number average molecular weight of 500 to 3,000 is preferably used from the viewpoint of achieving a further improvement of the adhesion to a substrate.

Examples of the polyester polyol include those obtained by subjecting a low molecular-weight polyol and a polycarboxylic acid to esterification reaction; a polyester obtained by subjecting a cyclic ester compound such as ε-caprolactone to ring-opening polymerization reaction; and copolymerized polyesters thereof.

Examples of the low molecular-weight polyol include polyols having a molecular weight of about 50 to 300 such as aliphatic polyols including ethylene glycol, propylene glycol, 1,4-butanediol, 1,6-hexanediol, diethylene glycol, neopentyl glycol, and 1,3-butanediol; alicyclic structure-containing polyols, such as cyclohexanedimethanol; and aromatic structure-containing polyols, such as bisphenol compounds, e.g., bisphenol A and bisphenol F, and alkylene oxide addition products thereof.

Examples of the polycarboxylic acid for the polyester polyol production include aliphatic polycarboxylic acids such as succinic acid, adipic acid, sebacic acid and dodecanedicarboxylic acid; aromatic polycarboxylic acids such as terephthalic acid, isophthalic acid, phthalic acid and naphthalenedicarboxylic acid; and anhydrides or ester-forming derivatives thereof.

With respect to the polyester polyol, from the viewpoint of achieving a further improvement of the adhesion to a substrate, a polyester polyol having a number average molecular weight of 500 to 3,000 is preferably used.

Examples of the polycarbonate polyol include those obtained by reacting a carbonate and a polyol, and those obtained by reacting phosgene and bisphenol A or the like.

Examples of the carbonate include methyl carbonate, dimethyl carbonate, ethyl carbonate, diethyl carbonate, cyclo carbonate, and diphenyl carbonate.

Examples of polyol that is applicable for the reaction with the carbonate include a relatively low molecular-weight diol having a molecular weight of 50 to 2,000, such as ethylene glycol, diethylene glycol, 1,2-propylene glycol, dipropylene glycol, 1,4-butanediol, 1,5-pentanediol, 3-methyl-1,5-pentanediol, 1,4-cyclohexanediol, 1,6-hexanediol, and cyclohexanedimethanol, a polyethylene glycol, a polypropylene glycol, and a polyester polyol, such as polyhexamethylene adipate.

With respect to the polycarbonate polyol, a polycarbonate polyol having a number average molecular weight of 500 to 3,000 is preferably used from the viewpoint of achieving a further improvement of the adhesion to a substrate.

Examples of the polyolefin polyol include polyethylene polyol, polypropylene polyol, polyisobutene polyol, hydrogenated polybutadiene polyol, and hydrogenated polyisoprene polyol.

Further, with respect to the polyol (a1), from the viewpoint of imparting excellent water dispersion stability to the urethane resin (A), the above-mentioned polyol and other polyol having a hydrophilic group can be used in combination.

With respect to the polyol having a hydrophilic group, for example, a polyol having an anionic group, a polyol having a cationic group, or a polyol having a nonionic group can be used as a polyol other than the above-mentioned polyol (a1). Of these, a polyol having an anionic group or a polyol having a cationic group is preferably used, and a polyol having an anionic group is more preferably used.

Examples of the polyol having an anionic group include polyols having a carboxyl group, and polyols having a sulfonic group.

Examples of the polyol having a carboxyl group include 2,2-dimethylolpropionic acid, 2,2-dimethylolbutanoic acid, 2,2-dimethylolbutyric acid, and 2,2-dimethylolvaleric acid. Of these, 2,2-dimethylolpropionic acid is preferred. Further, a polyester polyol having a carboxyl group can be used, which is obtained by reacting the polyol having a carboxyl group and various polycarboxylic acids with each other.

Examples of the polyol having a sulfonic group include polyester polyols which are obtained by reacting a dicarboxylic acid, such as 5-sulfoisophthalic acid, sulfoterephthalic acid, 4-sulfophthalic acid, or 5-(4-sulfophenoxy)isophthalic acid, or a salt thereof and the low molecular-weight polyol mentioned above as examples of those usable in producing the polyester polyol having an aromatic structure with each other.

The polyol having a carboxyl group or the polyol having a sulfonic group is preferably used in such an amount that the acid value of the urethane resin (A) becomes 5 to 70, more preferably used in such an amount that the acid value of the urethane resin (A) becomes 10 to 50. The acid value in the present invention is a theoretical value calculated based on the amount of the acid group-containing compound used, such as the polyol having a carboxyl group used in producing the urethane resin (A).

It is preferred that part of or all of the anionic group is neutralized by a basic compound or the like from the viewpoint of exhibiting excellent water dispersibility.

Examples of the basic compound usable in neutralizing the anionic group include organic amines having a boiling point of 200°C or higher, such as ammonia, triethylamine, morpholine, monoethanolamine, and diethylethanolamine; and metal hydroxides, such as sodium hydroxide, potassium hydroxide, and lithium hydroxide. From the viewpoint of improving the water dispersion stability of the urethane resin composition, the basic compound is preferably used in such an amount that the basic group/anionic group (molar ratio) of the basic compound becomes 0.5 to 3.0, more preferably used in such an amount that the basic group/anionic group (molar ratio) becomes 0.8 to 2.0.

As examples of the polyol having a cationic group, polyols having a tertiary amino group can be mentioned. Specific examples thereof include N-methyl-diethanolamine, and a polyol obtained by reacting a compound having two epoxys per molecule and a secondary amine with each other.

It is preferred that part of or all of the cationic group is neutralized by an acid compound, such as formic acid, acetic acid, propionic acid, succinic acid, glutaric acid, tartaric acid, or adipic acid.

Further, it is preferred that part of or all of the tertiary amino group as the cationic group is quaternized. Examples of the quaternizing agents include dimethyl sulfate, diethyl sulfate, methyl chloride, and ethyl chloride. Of these, dimethyl sulfate is preferably used.

Examples of the polyol having a nonionic group include polyols having a polyoxyethylene structure.

The polyol having a hydrophilic group is preferably used in an amount in the range of from 0.3 to 10% by mass, based on the total mass of the polyol (a1) used in producing the urethane resin (A).

Further, with respect to the polyol (a1), in addition to the above-mentioned polyol, the other polyol can be used, if necessary.

Examples of the other polyol include relatively low molecular-weight polyols, such as ethylene glycol, diethylene glycol, 1,2-propylene glycol, dipropylene glycol, neopentyl glycol, 1,4-butanediol, 1,5-pentanediol, 3-methyl-1,5-pentanediol, 1,4-cyclohexanediol, 1,6-hexanediol, and cyclohexanedimethanol.

With respect to the polyisocyanate (a2) which can be reacted with the polyol (a1), an aromatic polyisocyanate is an essential component, and, if necessary, the other polyisocyanate can be used in combination with the aromatic polyisocyanate.

Examples of the aromatic polyisocyanate include 1,3- or 1,4-phenylene diisocyanate, 1-methyl-2,4-phenylene diisocyanate, 1-methyl-2,6-phenylene diisocyanate, 1-methyl-2,5-phenylene diisocyanate, 1-methyl-2,6-phenylene diisocyanate, 1-methyl-3,5-phenylene diisocyanate, 1-ethyl-2,4-phenylene diisocyanate, 1-isopropyl-2,4-phenylene diisocyanate, 1,3-dimethyl-2,4-phenylene diisocyanate, 1,3-dimethyl-4,6-phenylene diisocyanate, 1,4-dimethyl-2,5-phenylene diisocyanate, diethylbenzene diisocyanate, diisopropylbenzene diisocyanate, 1-methyl-3,5-diethylbenzene diisocyanate, 3-methyl-1,5-diethylbenzene-2,4-diisocyanate, 1,3,5-triethylbenzene-2,4-diisocyanate, naphthalene-1,4-diisocyanate, naphthalene-1,5-diisocyanate, 1-methylnaphthalene-1,5-diisocyanate, naphthalene-2,6-diisocyanate, naphthalene-2,7-diisocyanate, 1,1-dinaphthyl-2,2'-diisocyanate, biphenyl-2,4'-diisocyanate, biphenyl-4,4'-diisocyanate, 3-3'-dimethylbiphenyl-4,4'-diisocyanate, diphenylmethane-4,4'-diisocyanate, diphenylmethane-2,2'-diisocyanate, diphenylmethane-2,4-diisocyanate, toluene diisocyanate, and xylylene diisocyanate. Of these, from the viewpoint of the ability to impart excellent film-forming properties to a coating film obtained using the steel sheet surface treatment agent of the present invention, at least one polyisocyanate selected from the group consisting of toluene diisocyanate, diphenylmethane diisocyanate, and xylylene diisocyanate is preferably used. These aromatic polyisocyanates can be used individually or in combination.

Examples of the other polyisocyanate include aliphatic polyisocyanates, such as tetramethylene diisocyanate, 1,6-hexamethylene diisocyanate, dodecamethylene diisocyanate, and trimethylhexamethylene diisocyanate; and alicyclic polyisocyanates, such as 1,3-cyclopentylene diisocyanate, 1,3-cyclohexylene diisocyanate, 1,4-cyclohexylene diisocyanate, 1,3-bis(isocyanatomethyl)cyclohexane, 1,4-bis(isocyanatomethyl)cyclohexane, lysine diisocyanate, isophorone diisocyanate, 4,4'-dicyclohexylmethane diisocyanate, 2,4'-dicyclohexylmethane diisocyanate, 2,2'-dicyclohexylmethane diisocyanate, and 3,3'-dimethyl-4,4'-dicyclohexylmethane diisocyanate.

The urethane prepolymer (A) having an isocyanate group can be produced by mixing together and reacting the polyol (a1) and the polyisocyanate (a2) with each other, for example, in the absence of a solvent or in the presence of an organic solvent.

The reaction of the polyol (a1) and the polyisocyanate (a2) is preferably conducted so that, for example, the equivalent ratio of the isocyanate group of the polyisocyanate (a2) to the hydroxyl group of the polyol (a1) [isocyanate group/hydroxyl group] becomes in the range of from 0.9 to 3, more preferably in the range of from 0.95 to 2.

The reaction of the polyol (a1) and the polyisocyanate (a2) is generally conducted at a temperature in the range of from 50 to 150°C.

The isocyanate group equivalent of the urethane prepolymer (A) obtained by the above-mentioned reaction is preferably 3,500 to 100,000 g/eq., more preferably 10,000 to 60,000 g/eq. from the viewpoint of the ability to form a coating film having excellent corrosion resistance.

Examples of organic solvent usable in producing the urethane prepolymer (A) include ketone solvents, such as acetone and methyl ethyl ketone; ether solvents, such as tetrahydrofuran and dioxane; acetate solvents, such as ethyl acetate and butyl acetate; nitrile solvents, such as acetonitrile; and amide solvents, such as dimethylformamide and N-methylpyrrolidone. These organic solvents can be used individually or in combination.

Further, with respect to the organic solvent, for safety or reduction of the burden on the environment, during or after the production of the urethane resin (A), part of or all of the organic solvent may be removed by, for example, distilling off under a reduced pressure.

With respect to the terminator (B) used in the present invention, the alcohol solvent (b1) having a boiling point in the range of from 150 to 350°C and having a number average molecular weight of 500 or less is essential, and, if necessary, the other terminator can be used in combination with the alcohol solvent. When an alcohol solvent having a boiling point of lower than 150°C is used, the alcohol component volatilizes, so that the reaction of the alcohol with the polyisocyanate (a2) is unsatisfactory. In such a case, the polyisocyanate (a2) remains unreacted, and the remaining polyisocyanate (a2) and water are reacted with each other to form an aromatic amine. The formed aromatic amine tends to cause yellowing, and, the aromatic amine likely causes the coating film to be yellowed when a coating film is formed from the resultant surface treatment agent, leading to a problem of the appearance.

Further, when an alcohol solvent having a number average molecular weight of more than 500 is used, the alcohol solvent does not volatilize during the solvent removal and/or drying of a coating film, and the alcohol solvent remains in the formed coating film when a coating film is formed from the resultant surface treatment agent. When the alcohol solvent remains in the coating film, the coating film is plasticized, so that the corrosion resistance of the coating film becomes unsatisfactory.

The alcohol solvent (b1) includes hexanol, heptanol, octanol, nonanol, undecanol, 1,2-propanediol, 1,3-propanediol, 1,2-butanediol, 1,3-butanediol, 1,4-butanediol, 2,3-butanediol, 1,2-pentanediol, 1,5-pentanediol, 1,2-hexanediol, or 1,6-hexanediol. Of these, from the viewpoint of controlling the reactivity with an isocyanate, at least one alcohol solvent selected from the group consisting of 1,2-propanediol, 1,2-butanediol, and 1,3-butanediol is preferred.

From the viewpoint of the ability to impart excellent heat yellowing resistance and corrosion resistance to a coating film obtained using the steel sheet surface treatment agent of the present invention, the amount of the alcohol solvent (b1) contained is in the range of from 0.1 to 10 parts by mass relative to 100 parts by mass of the urethane prepolymer (A).

When the amount of the alcohol solvent (b1) contained is less than 0.01 part by mass relative to 100 parts by mass of the urethane prepolymer (A), the reaction of the alcohol with the polyisocyanate (a2) is unsatisfactory. In such a case, the polyisocyanate (a2) remains unreacted, and the remaining polyisocyanate (a2) and water are reacted with each other to form an aromatic amine. The formed aromatic amine tends to cause yellowing, and, when a coating film is formed from the resultant surface treatment agent, the aromatic amine presumably causes the coating film to be yellowed, thereby raising a problem of the appearance.

Further, when the amount of the alcohol solvent (b1) contained is more than 20 parts by mass relative to 100 parts by mass of the urethane prepolymer (A), the alcohol solvent does not volatilize during the solvent removal and/or drying of a coating film, and the alcohol solvent remains in the formed coating film when a coating film is formed from the resultant surface treatment agent. When the alcohol solvent remains in the coating film, the coating film is plasticized, so that the corrosion resistance of the coating film becomes unsatisfactory.

Examples of the other terminator include dibutylamine, ethanolamine, diethanolamine, aminosilane, and ammonia.

The urethane prepolymer (A) and the terminator (B) are reacted with each other, so that a urethane resin can be obtained.

Examples of the aqueous medium (C) used in the steel sheet surface treatment agent of the present invention include waster, an organic solvent miscible with water, and a mixture thereof. Examples of the organic solvent miscible with water include alcohol solvents, such as methanol, ethanol, n-propanol, and isopropanol; ketone solvents, such as acetone and methyl ethyl ketone; polyalkylene glycols, such as ethylene glycol, diethylene glycol, and propylene glycol; alkyl ether solvents, such as polyalkylene glycol; and lactam solvents, such as N-methyl-2-pyrrolidone. These organic solvents miscible with water can be used individually or in combination.

Further, with respect to the aqueous medium (C), taking into consideration the safety and reduction of the burden on the environment, only water, or a mixture of water and an organic solvent miscible with water is preferred, and only water is more preferred.

The aqueous urethane resin composition used in the steel sheet surface treatment agent of the present invention can be produced by, specifically, a method having:
the first step of reacting the polyol (a1) and the polyisocyanate (a2) containing an aromatic polyisocyanate with each other to obtain a urethane prepolymer (A) having an isocyanate group;
the second step of reacting the obtained urethane prepolymer (A) and a terminator (B) containing an alcohol solvent (b1) having a boiling point in the range of from 150 to 350°C and having a number average molecular weight of 500 or less with each other at 55°C or higher, and dispersing the resultant urethane resin in an aqueous medium (C) to obtain an aqueous dispersion of the urethane resin; and
the third step of subjecting the aqueous dispersion of the urethane resin to aging and/or solvent removal.

When reacting the urethane prepolymer (A) and the terminator (B) with each other, it is preferred that the isocyanate group of the urethane prepolymer (A) is completely reacted by the terminator (B) from the viewpoint of achieving an improvement of the heat yellowing resistance of the resultant coating film.

The reaction of the urethane prepolymer (A) and the terminator (B) is conducted at 55 to 150°C, and, for causing the terminator (B) to completely react the isocyanate group of the urethane prepolymer (A), the reaction is conducted preferably at 60 to 150°C, more preferably at 70 to 150°C.

The steel sheet surface treatment agent of the present invention can be used in coating of various types of metal substrates for the purpose of surface protection of various types of metal substrates and imparting design properties to various types of metal substrates.

Examples of the metal substrate include plated steel sheets, such as a zinc-plated steel sheet and an aluminum-zinc alloy steel sheet, an aluminum sheet, an aluminum alloy sheet, an electrical steel sheet, a copper sheet, and a stainless steel sheet.

The steel sheet surface treatment agent of the present invention is advantageous in that even when the crosslinked coating film of the agent has a thickness as small as about 5 µm, a coating film having excellent chemical resistance including an acid resistance, an alkali resistance and the like can be formed. Further, the steel sheet surface treatment agent is advantageous in that even when the crosslinked coating film of the agent has a thickness as small as about 1 µm, a coating film having excellent chemical resistance including an acid resistance, an alkali resistance and the like can be formed.

The steel sheet surface treatment agent of the present invention is applied to a substrate, and dried and cured, forming a coating film.

Examples of the method for application include a spraying method, a curtain coater method, a flow coater method, a roll coater method, a brushing method, and an immersion method.

The drying may be natural drying made at room temperature, but drying by heating can be made. The drying by heating is preferably conducted generally at 40 to 250°C for a period of time of about 1 to 600 seconds.

With respect to the steel sheet having a coating film of the steel sheet surface treatment agent of the present invention, for example, there can be mentioned plated steel sheets, such as a zinc-plated steel sheet and an aluminum-zinc alloy steel sheet, an aluminum sheet, an aluminum alloy sheet, an electrical steel sheet, a copper sheet, and a stainless steel sheet, which are used in the applications of automobiles, household appliances, building materials, and the like.

### EXAMPLES

Hereinbelow, the present invention will be described in more detail with reference to the following Examples and Comparative Examples.

### (Example 1: Preparation of a steel sheet surface treatment agent (1))

In a vessel equipped with a thermometer, a nitrogen gas introducing pipe, and a stirrer and purged with nitrogen gas, 800 parts by mass of polytetramethylene glycol having a number average molecular weight of 1,000, 47 parts by mass of 2,2-dimethylolpropionic acid, 138 parts by mass of a propylene oxide (2 mol) addition product of bisphenol A, and 397 parts by mass of diphenylmethane diisocyanate were reacted in 1,381 parts by mass of methyl ethyl ketone in the form of a mixture solution at 70°C to obtain an organic solvent solution of a urethane prepolymer having an isocyanate group at the molecular terminal.

Then, 28 parts by mass of 1,3-butanediol was added to the organic solvent solution of the urethane prepolymer, and the resultant mixture was subjected to reaction at 70°C so that the reaction of the isocyanate component was completely terminated. Subsequently, the resultant reaction mixture was cooled to 40°C, and 35 parts by mass of triethylamine was added to the mixture to neutralize part of or all of the carboxyl group of the urethane prepolymer, and 2,699 parts by mass of water was further added and the resultant mixture was satisfactorily stirred to obtain an aqueous dispersion of a urethane resin. Then, the aqueous dispersion was subjected to aging and solvent removal to obtain a steel sheet surface treatment agent (1) having a nonvolatile content of 30% by mass.

### (Example 2: Preparation of a steel sheet surface treatment agent (2))

In a vessel equipped with a thermometer, a nitrogen gas introducing pipe, and a stirrer and purged with nitrogen gas, 800 parts by mass of polytetramethylene glycol having a number average molecular weight of 1,000, 47 parts by mass of 2,2-dimethylolpropionic acid, 138 parts by mass of a propylene oxide (2 mol) addition product of bisphenol A, and 397 parts by mass of diphenylmethane diisocyanate were reacted in 1,381 parts by mass of methyl ethyl ketone in the form of a mixture solution at 70°C to obtain an organic solvent solution of a urethane prepolymer having an isocyanate group at the molecular terminal.

Then, 28 parts by mass of 1,2-propanediol was added to the organic solvent solution of the urethane prepolymer, and the resultant mixture was subjected to reaction at 70°C so that the reaction of the isocyanate component was completely terminated. Subsequently, the resultant reaction mixture was cooled to 40°C, and 35 parts by mass of triethylamine was added to the mixture to neutralize part of or all of the carboxyl group of the urethane prepolymer, and 2,699 parts by mass of water was further added and the resultant mixture was satisfactorily stirred to obtain an aqueous dispersion of a urethane resin. Then, the aqueous dispersion was subjected to aging and solvent removal to obtain a steel sheet surface treatment agent (2) having a nonvolatile content of 30% by mass.

### (Example 3: Preparation of a steel sheet surface treatment agent (3))

In a vessel equipped with a thermometer, a nitrogen gas introducing pipe, and a stirrer and purged with nitrogen gas, 800 parts by mass of polytetramethylene glycol having a number average molecular weight of 1,000, 47 parts by mass of 2,2-dimethylolpropionic acid, 138 parts by mass of a propylene oxide (2 mol) addition product of bisphenol A, and 275 parts by mass of toluene diisocyanate were reacted in 1,260 parts by mass of methyl ethyl ketone in the form of a mixture solution at 70°C to obtain an organic solvent solution of a urethane prepolymer having an isocyanate group at the molecular terminal.

Then, 25 parts by mass of 1,3-butanediol was added to the organic solvent solution of the urethane prepolymer, and the resultant mixture was subjected to reaction at 70°C so that the reaction of the isocyanate component was completely terminated. Subsequently, the resultant reaction mixture was cooled to 40°C, and 35 parts by mass of triethylamine was added to the mixture to neutralize part of or all of the carboxyl group of the urethane prepolymer, and 2,459 parts by mass of water was further added and the resultant mixture was satisfactorily stirred to obtain an aqueous dispersion of a urethane resin. Then, the aqueous dispersion was subjected to aging and solvent removal to obtain a steel sheet surface treatment agent (3) having a nonvolatile content of 30% by mass.

### (Example 4: Preparation of a steel sheet surface treatment agent (4)) - For reference and/or comparison only

In a vessel equipped with a thermometer, a nitrogen gas introducing pipe, and a stirrer and purged with nitrogen gas, 800 parts by mass of a polyester polyol having a number average molecular weight of 1,000 and being formed from 1,4-butanediol and adipic acid, 47 parts by mass of 2,2-dimethylolpropionic acid, 138 parts by mass of a propylene oxide (2 mol) addition product of bisphenol A, and 397 parts by mass of diphenylmethane diisocyanate were reacted in 1,381 parts by mass of methyl ethyl ketone in the form of a mixture solution at 70°C to obtain an organic solvent solution of a urethane prepolymer having an isocyanate group at the molecular terminal.

Then, 28 parts by mass of 1,3-butanediol was added to the organic solvent solution of the urethane prepolymer, and the resultant mixture was subjected to reaction at 70°C so that the reaction of the isocyanate component was completely terminated. Subsequently, the resultant reaction mixture was cooled to 40°C, and 35 parts by mass of triethylamine was added to the mixture to neutralize part of or all of the carboxyl group of the urethane prepolymer, and 2,699 parts by mass of water was further added and the resultant mixture was satisfactorily stirred to obtain an aqueous dispersion of a urethane resin. Then, the aqueous dispersion was subjected to aging and solvent removal to obtain a steel sheet surface treatment agent (4) having a nonvolatile content of 30% by mass.

### (Example 5: Preparation of a steel sheet surface treatment agent (5))

In a vessel equipped with a thermometer, a nitrogen gas introducing pipe, and a stirrer and purged with nitrogen gas, 800 parts by mass of polytetramethylene glycol having a number average molecular weight of 1,000, 47 parts by mass of 2,2-dimethylolpropionic acid, 138 parts by mass of a propylene oxide (2 mol) addition product of bisphenol A, and 397 parts by mass of diphenylmethane diisocyanate were reacted in 1,381 parts by mass of methyl ethyl ketone in the form of a mixture solution at 70°C to obtain an organic solvent solution of a urethane prepolymer having an isocyanate group at the molecular terminal.

Then, 28 parts by mass of hexanol was added to the organic solvent solution of the urethane prepolymer, and the resultant mixture was subjected to reaction at 70°C so that the reaction of the isocyanate component was completely terminated. Subsequently, the resultant reaction mixture was cooled to 40°C, and 35 parts by mass of triethylamine was added to the mixture to neutralize part of or all of the carboxyl group of the urethane prepolymer, and 2,699 parts by mass of water was further added and the resultant mixture was satisfactorily stirred to obtain an aqueous dispersion of a urethane resin. Then, the aqueous dispersion was subjected to aging and solvent removal to obtain a steel sheet surface treatment agent (5) having a nonvolatile content of 30% by mass.

### (Example 6: Preparation of a steel sheet surface treatment agent (6))

In a vessel equipped with a thermometer, a nitrogen gas introducing pipe, and a stirrer and purged with nitrogen gas, 800 parts by mass of polytetramethylene glycol having a number average molecular weight of 1,000, 47 parts by mass of 2,2-dimethylolpropionic acid, 138 parts by mass of a propylene oxide (2 mol) addition product of bisphenol A, and 405 parts by mass of diphenylmethane diisocyanate were reacted in 1,390 parts by mass of methyl ethyl ketone in the form of a mixture solution at 70°C to obtain an organic solvent solution of a urethane prepolymer having an isocyanate group at the molecular terminal.

Then, 28 parts by mass of 1,3-butanediol was added to the organic solvent solution of the urethane prepolymer, and the resultant mixture was subjected to reaction at 70°C so that the reaction of the isocyanate component was completely terminated. Subsequently, the resultant reaction mixture was cooled to 40°C, and 35 parts by mass of triethylamine was added to the mixture to neutralize part of or all of the carboxyl group of the urethane prepolymer, and 2,716 parts by mass of water was further added and the resultant mixture was satisfactorily stirred to obtain an aqueous dispersion of a urethane resin. Then, the aqueous dispersion was subjected to aging and solvent removal to obtain a steel sheet surface treatment agent (6) having a nonvolatile content of 30% by mass.

### (Example 7: Preparation of a steel sheet surface treatment agent (7))

In a vessel equipped with a thermometer, a nitrogen gas introducing pipe, and a stirrer and purged with nitrogen gas, 800 parts by mass of polytetramethylene glycol having a number average molecular weight of 1,000, 47 parts by mass of 2,2-dimethylolpropionic acid, 138 parts by mass of a propylene oxide (2 mol) addition product of bisphenol A, and 423 parts by mass of diphenylmethane diisocyanate were reacted in 1,408 parts by mass of methyl ethyl ketone in the form of a mixture solution at 70°C to obtain an organic solvent solution of a urethane prepolymer having an isocyanate group at the molecular terminal.

Then, 28 parts by mass of 1,3-butanediol was added to the organic solvent solution of the urethane prepolymer, and the resultant mixture was subjected to reaction at 70°C so that the reaction of the isocyanate component was completely terminated. Subsequently, the resultant reaction mixture was cooled to 40°C, and 35 parts by mass of triethylamine was added to the mixture to neutralize part of or all of the carboxyl group of the urethane prepolymer, and 2,752 parts by mass of water was further added and the resultant mixture was satisfactorily stirred to obtain an aqueous dispersion of a urethane resin. Then, the aqueous dispersion was subjected to aging and solvent removal to obtain a steel sheet surface treatment agent (7) having a nonvolatile content of 30% by mass.

### (Example 8: Preparation of a steel sheet surface treatment agent (8))

In a vessel equipped with a thermometer, a nitrogen gas introducing pipe, and a stirrer and purged with nitrogen gas, 800 parts by mass of polytetramethylene glycol having a number average molecular weight of 1,000, 47 parts by mass of 2,2-dimethylolpropionic acid, 138 parts by mass of a propylene oxide (2 mol) addition product of bisphenol A, and 442 parts by mass of diphenylmethane diisocyanate were reacted in 1,427 parts by mass of methyl ethyl ketone in the form of a mixture solution at 70°C to obtain an organic solvent solution of a urethane prepolymer having an isocyanate group at the molecular terminal.

Then, 71 parts by mass of 1,3-butanediol was added to the organic solvent solution of the urethane prepolymer, and the resultant mixture was subjected to reaction at 70°C so that the reaction of the isocyanate component was completely terminated. Subsequently, the resultant reaction mixture was cooled to 40°C, and 35 parts by mass of triethylamine was added to the mixture to neutralize part of or all of the carboxyl group of the urethane prepolymer, and 2,746 parts by mass of water was further added and the resultant mixture was satisfactorily stirred to obtain an aqueous dispersion of a urethane resin. Then, the aqueous dispersion was subjected to aging and solvent removal to obtain a steel sheet surface treatment agent (8) having a nonvolatile content of 30% by mass.

### (Example 9: Preparation of a steel sheet surface treatment agent (9))

In a vessel equipped with a thermometer, a nitrogen gas introducing pipe, and a stirrer and purged with nitrogen gas, 800 parts by mass of polytetramethylene glycol having a number average molecular weight of 1,000, 47 parts by mass of 2,2-dimethylolpropionic acid, 138 parts by mass of a propylene oxide (2 mol) addition product of bisphenol A, and 388 parts by mass of diphenylmethane diisocyanate were reacted in 1,372 parts by mass of methyl ethyl ketone in the form of a mixture solution at 70°C to obtain an organic solvent solution of a urethane prepolymer having an isocyanate group at the molecular terminal.

Then, 0.1 part by mass of 1,3-butanediol was added to the organic solvent solution of the urethane prepolymer, and the resultant mixture was subjected to reaction at 70°C so that the reaction of the isocyanate component was completely terminated. Subsequently, the resultant reaction mixture was cooled to 40°C, and 35 parts by mass of triethylamine was added to the mixture to neutralize part of or all of the carboxyl group of the urethane prepolymer, and 2,709 parts by mass of water was further added and the resultant mixture was satisfactorily stirred to obtain an aqueous dispersion of a urethane resin. Then, the aqueous dispersion was subjected to aging and solvent removal to obtain a steel sheet surface treatment agent (9) having a nonvolatile content of 30% by mass.

### (Example 10: Preparation of a steel sheet surface treatment agent (10))

In a vessel equipped with a thermometer, a nitrogen gas introducing pipe, and a stirrer and purged with nitrogen gas, 800 parts by mass of polytetramethylene glycol having a number average molecular weight of 1,000, 47 parts by mass of 2,2-dimethylolpropionic acid, 138 parts by mass of a propylene oxide (2 mol) addition product of bisphenol A, and 397 parts by mass of diphenylmethane diisocyanate were reacted in 1,381 parts by mass of methyl ethyl ketone in the form of a mixture solution at 70°C to obtain an organic solvent solution of a urethane prepolymer having an isocyanate group at the molecular terminal.

Then, 345 parts by mass of 1,3-butanediol was added to the organic solvent solution of the urethane prepolymer, and the resultant mixture was subjected to reaction at 70°C so that the reaction of the isocyanate component was completely terminated. Subsequently, the resultant reaction mixture was cooled to 40°C, and 35 parts by mass of triethylamine was added to the mixture to neutralize part of or all of the carboxyl group of the urethane prepolymer, and 2,381 parts by mass of water was further added and the resultant mixture was satisfactorily stirred to obtain an aqueous dispersion of a urethane resin. Then, the aqueous dispersion was subjected to aging and solvent removal to obtain a steel sheet surface treatment agent (10) having a nonvolatile content of 30% by mass.

### (Example 11: Preparation of a steel sheet surface treatment agent (11))

In a vessel equipped with a thermometer, a nitrogen gas introducing pipe, and a stirrer and purged with nitrogen gas, 800 parts by mass of polytetramethylene glycol having a number average molecular weight of 1,000, 47 parts by mass of 2,2-dimethylolpropionic acid, 138 parts by mass of a propylene oxide (2 mol) addition product of bisphenol A, and 397 parts by mass of diphenylmethane diisocyanate were reacted in 1,381 parts by mass of methyl ethyl ketone in the form of a mixture solution at 70°C to obtain an organic solvent solution of a urethane prepolymer having an isocyanate group at the molecular terminal.

Then, 28 parts by mass of 1,3-butanediol was added to the organic solvent solution of the urethane prepolymer, and the resultant mixture was subjected to reaction at 50°C so that the reaction of the isocyanate component was completely terminated. Subsequently, the resultant reaction mixture was cooled to 40°C, and 35 parts by mass of triethylamine was added to the mixture to neutralize part of or all of the carboxyl group of the urethane prepolymer, and 2,699 parts by mass of water was further added and the resultant mixture was satisfactorily stirred to obtain an aqueous dispersion of a urethane resin. Then, the aqueous dispersion was subjected to aging and solvent removal to obtain a steel sheet surface treatment agent (11) having a nonvolatile content of 30% by mass.

### (Example 12: Preparation of a steel sheet surface treatment agent (12))

In a vessel equipped with a thermometer, a nitrogen gas introducing pipe, and a stirrer and purged with nitrogen gas, 800 parts by mass of polytetramethylene glycol having a number average molecular weight of 1,000, 47 parts by mass of 2,2-dimethylolpropionic acid, 138 parts by mass of a propylene oxide (2 mol) addition product of bisphenol A, and 397 parts by mass of diphenylmethane diisocyanate were reacted in 1,381 parts by mass of methyl ethyl ketone in the form of a mixture solution at 70°C to obtain an organic solvent solution of a urethane prepolymer having an isocyanate group at the molecular terminal.

Then, 28 parts by mass of 1,3-butanediol was added to the organic solvent solution of the urethane prepolymer, and the resultant mixture was subjected to reaction at 55°C so that the reaction of the isocyanate component was completely terminated. Subsequently, the resultant reaction mixture was cooled to 40°C, and 35 parts by mass of triethylamine was added to the mixture to neutralize part of or all of the carboxyl group of the urethane prepolymer, and 2,699 parts by mass of water was further added and the resultant mixture was satisfactorily stirred to obtain an aqueous dispersion of a urethane resin. Then, the aqueous dispersion was subjected to aging and solvent removal to obtain a steel sheet surface treatment agent (12) having a nonvolatile content of 30% by mass.

### (Example 13: Preparation of a steel sheet surface treatment agent (13))

In a vessel equipped with a thermometer, a nitrogen gas introducing pipe, and a stirrer and purged with nitrogen gas, 800 parts by mass of polytetramethylene glycol having a number average molecular weight of 1,000, 47 parts by mass of 2,2-dimethylolpropionic acid, 138 parts by mass of a propylene oxide (2 mol) addition product of bisphenol A, and 397 parts by mass of diphenylmethane diisocyanate were reacted in 1,381 parts by mass of methyl ethyl ketone in the form of a mixture solution at 70°C to obtain an organic solvent solution of a urethane prepolymer having an isocyanate group at the molecular terminal.

Then, 28 parts by mass of 1,3-butanediol was added to the organic solvent solution of the urethane prepolymer, and the resultant mixture was subjected to reaction at 60°C so that the reaction of the isocyanate component was completely terminated. Subsequently, the resultant reaction mixture was cooled to 40°C, and 35 parts by mass of triethylamine was added to the mixture to neutralize part of or all of the carboxyl group of the urethane prepolymer, and 2,699 parts by mass of water was further added and the resultant mixture was satisfactorily stirred to obtain an aqueous dispersion of a urethane resin. Then, the aqueous dispersion was subjected to aging and solvent removal to obtain a steel sheet surface treatment agent (13) having a nonvolatile content of 30% by mass.

### (Comparative Example 1: Preparation of a steel sheet surface treatment agent (C1))

In a vessel equipped with a thermometer, a nitrogen gas introducing pipe, and a stirrer and purged with nitrogen gas, 800 parts by mass of polytetramethylene glycol having a number average molecular weight of 1,000, 47 parts by mass of 2,2-dimethylolpropionic acid, 138 parts by mass of a propylene oxide (2 mol) addition product of bisphenol A, and 352 parts by mass of isophorone diisocyanate were reacted in 1,336 parts by mass of methyl ethyl ketone in the form of a mixture solution at 70°C to obtain an organic solvent solution of a urethane prepolymer having an isocyanate group at the molecular terminal.

Then, 27 parts by mass of 1,3-butanediol was added to the organic solvent solution of the urethane prepolymer, and the resultant mixture was subjected to reaction at 70°C so that the reaction of the isocyanate component was completely terminated. Subsequently, the resultant reaction mixture was cooled to 40°C, and 35 parts by mass of triethylamine was added to the mixture to neutralize part of or all of the carboxyl group of the urethane prepolymer, and 2,611 parts by mass of water was further added and the resultant mixture was satisfactorily stirred to obtain an aqueous dispersion of a urethane resin. Then, the aqueous dispersion was subjected to aging and solvent removal to obtain a steel sheet surface treatment agent (C1) having a nonvolatile content of 30% by mass.

### (Comparative Example 2: Preparation of a steel sheet surface treatment agent (C2))

In a vessel equipped with a thermometer, a nitrogen gas introducing pipe, and a stirrer and purged with nitrogen gas, 800 parts by mass of polytetramethylene glycol having a number average molecular weight of 1,000, 47 parts by mass of 2,2-dimethylolpropionic acid, 138 parts by mass of a propylene oxide (2 mol) addition product of bisphenol A, and 397 parts by mass of diphenylmethane diisocyanate were reacted in 1,381 parts by mass of methyl ethyl ketone in the form of a mixture solution at 70°C to obtain an organic solvent solution of a urethane prepolymer having an isocyanate group at the molecular terminal.

Then, 28 parts by mass of methanol was added to the organic solvent solution of the urethane prepolymer, and the resultant mixture was subjected to reaction at 70°C so that the reaction of the isocyanate component was completely terminated. Subsequently, the resultant reaction mixture was cooled to 40°C, and 35 parts by mass of triethylamine was added to the mixture to neutralize part of or all of the carboxyl group of the urethane prepolymer, and 2,699 parts by mass of water was further added and the resultant mixture was satisfactorily stirred to obtain an aqueous dispersion of a urethane resin. Then, the aqueous dispersion was subjected to aging and solvent removal to obtain a steel sheet surface treatment agent (C2) having a nonvolatile content of 30% by mass.

### (Comparative Example 3: Preparation of a steel sheet surface treatment agent (C3))

In a vessel equipped with a thermometer, a nitrogen gas introducing pipe, and a stirrer and purged with nitrogen gas, 800 parts by mass of polytetramethylene glycol having a number average molecular weight of 1,000, 47 parts by mass of 2,2-dimethylolpropionic acid, 138 parts by mass of a propylene oxide (2 mol) addition product of bisphenol A, and 397 parts by mass of diphenylmethane diisocyanate were reacted in 1,381 parts by mass of methyl ethyl ketone in the form of a mixture solution at 70°C to obtain an organic solvent solution of a urethane prepolymer having an isocyanate group at the molecular terminal.

Then, 28 parts by mass of polypropylene glycol having a number average molecular weight of 650 was added to the organic solvent solution of the urethane prepolymer, and the resultant mixture was subjected to reaction at 70°C so that the reaction of the isocyanate component was completely terminated. Subsequently, the resultant reaction mixture was cooled to 40°C, and 35 parts by mass of triethylamine was added to the mixture to neutralize part of or all of the carboxyl group of the urethane prepolymer, and 2,699 parts by mass of water was further added and the resultant mixture was satisfactorily stirred to obtain an aqueous dispersion of a urethane resin. Then, the aqueous dispersion was subjected to aging and solvent removal to obtain a steel sheet surface treatment agent (C3) having a nonvolatile content of 30% by mass.

### (Comparative Example 4: Preparation of a steel sheet surface treatment agent (C4))

In a vessel equipped with a thermometer, a nitrogen gas introducing pipe, and a stirrer and purged with nitrogen gas, 800 parts by mass of polytetramethylene glycol having a number average molecular weight of 1,000, 47 parts by mass of 2,2-dimethylolpropionic acid, 138 parts by mass of a propylene oxide (2 mol) addition product of bisphenol A, and 397 parts by mass of diphenylmethane diisocyanate were reacted in 1,381 parts by mass of methyl ethyl ketone in the form of a mixture solution at 70°C to obtain an organic solvent solution of a urethane prepolymer having an isocyanate group at the molecular terminal.

Then, the obtained organic solvent solution of the urethane prepolymer was cooled to 40°C, and 35 parts by mass of triethylamine was added to the solution to neutralize part of or all of the carboxyl group of the urethane prepolymer, and 2,699 parts by mass of water was further added and the resultant mixture was satisfactorily stirred to obtain an aqueous dispersion of a urethane resin. Then, 2 parts by mass of ethylenediamine was added to the aqueous dispersion to cause chain extension, and the resultant mixture was subjected to aging and solvent removal to obtain a steel sheet surface treatment agent (C4) having a nonvolatile content of 30% by mass.

Using the steel sheet surface treatment agents obtained in the above Examples and Comparative Examples, the following evaluations were performed.

### [Evaluation method for heat yellowing resistance]

A polypropylene film having an outer frame having a height of 1 mm was put on an A4-size glass plate, and the steel sheet surface treatment agent obtained with respect to each of Examples 1 to 10 and Comparative Examples 1 to 4 was applied onto the polypropylene film in an amount of 6 g/100 cm², and dried at 25°C for one day to form a coating film having a thickness of about 150 µm. The formed coating film was subjected to heating treatment at 108°C for 2 hours, and then released from the polypropylene film, and the resultant coating film was used as a test film. The obtained test film was subjected to heat discoloration resistance test in which the film was allowed to stand at a temperature of 200°C for 30 minutes. With respect to the degree of discoloration of the film after subjected to the test, a b value which indicates yellowness was measured using spectrocolorimeter "CM-3500d", manufactured by Konica Minolta Holdings, Inc., and a difference Δb between the b values before and after the test was determined, and evaluated in accordance with the following criteria.
A: The test film had a Δb of less than 5.
B: The test film had a Δb of 5 to less than 10.
C: The test film had a Δb of 10 to less than 15.
D: The test film had a Δb of 15 or more.

### [Preparation of a test specimen]

The steel sheet surface treatment agent obtained with respect to each of Examples 1 to 13 and Comparative Examples 1 to 4 was applied onto a 55% by mass aluminum-zinc alloy-plated steel sheet which is not subjected to surface treatment so as to provide a thickness of 1 µm, and dried at 250°C for 10 seconds to prepare a test specimen.

### [Evaluation method for chemical resistance (alkali resistance)]

Using the above-prepared test specimen, with respect to the coating film obtained after immersed in an aqueous sodium hydroxide solution having a concentration of 1% by mass for 5 hours, the state of deterioration was visually evaluated in accordance with the following criteria.
A: The area of the coating film which caused blacking or discoloration to brown was less than 10% of the area of the entire surface of the coating film.
B: The area of the coating film which caused blacking or discoloration to brown was 10 to less than 40% of the area of the entire surface of the coating film.
C: The area of the coating film which caused blacking or discoloration to brown was 40 to less than 70% of the area of the entire surface of the coating film.
D: The area of the coating film which caused blacking or discoloration to brown was 70% or more of the area of the entire surface of the coating film.

### [Evaluation method for chemical resistance (acid resistance)]

Using the above-prepared test specimen, with respect to the coating film obtained after immersed in an aqueous hydrochloric acid solution having a concentration of 1% by mass for 24 hours, the state of deterioration was visually evaluated in accordance with the following criteria.
A: The area of the coating film which caused blacking or discoloration to brown was less than 10% of the area of the entire surface of the coating film.
B: The area of the coating film which caused blacking or discoloration to brown was 10 to less than 40% of the area of the entire surface of the coating film.
C: The area of the coating film which caused blacking or discoloration to brown was 40 to less than 70% of the area of the entire surface of the coating film.
D: The area of the coating film which caused blacking or discoloration to brown was 70% or more of the area of the entire surface of the coating film.

### [Evaluation method for corrosion resistance of a coating film]

The surface of the coating film constituting the test specimen was scratched by a cutting knife at such a depth that the knife reached the substrate, and subjected to salt spray test using a salt spray tester, manufactured by Suga Test Instruments Co., Ltd., and, after 240 hours, the rusting area was visually determined and evaluated. The measurement was made by a method in accordance with the JIS test method (JIS Z2371:2000).
A: The area which rusted was less than 10% of the area of the entire surface of the coating film.
B: The area which rusted was 10 to less than 40% of the area of the entire surface of the coating film.
C: The area which rusted was 40 to less than 70% of the area of the entire surface of the coating film.
D: The area which rusted was 70% or more of the area of the entire surface of the coating film.

The formulations of the steel sheet surface treatment agents (1) to (10) obtained in Examples 1 to 13 and the results of the evaluations, and the formulations of the steel sheet surface treatment agents (C1) to (C4) obtained in Comparative Examples 1 to 4 and the results of the evaluations are shown in Table 1.

**[Table 1]**

| Table 1 | | Example 1 | Example 2 | Example 3 | Example 4* | Example 5 | Example 6 | Example 7 | Example 8 | Example 9 | Example 10 | Example 11 | Example 12 | Example 13 | Comparative Example 1 | Comparative Example 2 | Comparative Example 3 | Comparative Example 4 |
|---|---|---|---|---|---|---|---|---|---|---|---|---|---|---|---|---|---|---|
| Steel sheet surface treatment agent | | (1) | (2) | (3) | (4) | (5) | (6) | (7) | (8) | (9) | (10) | (11) | (12) | (13) | (C1) | (C2) | (C3) | (C4) |
| Formulation of urethane prepolymer | Polytetramethylene glycol | 800 | 800 | 800 | | 800 | 800 | 800 | 800 | 800 | 800 | 800 | 800 | 800 | 800 | 800 | 800 | 800 |
| | Polyester polyol prepared from 1,4-butanediol and adipic acid | | | | 800 | | | | | | | | | | | | | |
| | 2,2-Dimethylolpropionic acid | 47 | 47 | 47 | 47 | 47 | 47 | 47 | 47 | 47 | 47 | 47 | 47 | 47 | 47 | 47 | 47 | 47 |
| | Propylene oxide (2 mol) addition product of bisphenol A | 138 | 138 | 138 | 138 | 138 | 138 | 138 | 138 | 138 | 138 | 138 | 138 | 138 | 138 | 138 | 138 | 138 |
| | Diphenylmethane diisocyanate | 397 | 397 | | 397 | 397 | 405 | 423 | 442 | 388 | 397 | 397 | 397 | 397 | | 397 | 397 | 397 |
| | Toluene diisocyanate | | | 275 | | | | | | | | | | | | | | |
| | Isophorone diisocyanate | | | | | | | | | | | | | | 352 | | | |
| Terminator | 1,3-Butanediol | 28 | | 25 | 28 | | 28 | 28 | 71 | 0.07 | 345 | 28 | 28 | 28 | 27 | | | |
| | 1,2-Pentanediol | | 28 | | | | | | | | | | | | | | | |
| | Hexanol | | | | | 28 | | | | | | | | | | | | |
| | Methanol | | | | | | | | | | | | | | | 28 | | |
| | Polypropylene glycol | | | | | | | | | | | | | | | | 28 | |
| Chain extender | Ethylenediamine | | | | | | | | | | | | | | | | | 2 |
| Isocyanate group equivalent of urethane prepolymer [g/eq.] | | 20000 | 20000 | 20000 | 20000 | 20000 | 10000 | 5000 | 3300 | 60000 | 20000 | 20000 | 20000 | 20000 | 20000 | 20000 | 20000 | 20000 |
| Temperature of termination reaction [°C] | | 70 | 70 | 70 | 70 | 70 | 70 | 70 | 70 | 70 | 70 | 50 | 55 | 60 | 70 | 70 | 70 | 70 |
| Heat yellowing resistance | | A | A | A | A | B | A | A | A | C | A | C | B | A | A | D | D | D |
| Chemical resistance (alkali resistance) | | A | A | A | B | A | A | A | A | A | B | A | A | A | D | C | D | A |
| Chemical resistance (acid resistance) | | A | A | A | B | A | A | A | A | A | A | A | A | A | D | C | D | B |
| Corrosion resistance | | A | A | A | A | A | A | A | B | A | B | A | A | A | D | D | D | B |

| | | | | | | | | | | | | | | | | | | |
|---|---|---|---|---|---|---|---|---|---|---|---|---|---|---|---|---|---|---|
| *For reference and/or comparison only. | | | | | | | | | | | | | | | | | | |

It has been confirmed from the results of the evaluations in Examples 1 to 13 shown in Table 1 that the coating film obtained using the steel sheet surface treatment agent of the present invention has excellent heat yellowing resistance, excellent chemical resistance, and excellent corrosion resistance.

On the other hand, Comparative Example 1 is an example in which an alicyclic polyisocyanate was used as a polyisocyanate component which is a raw material for a urethane prepolymer. It has been confirmed that the coating film obtained using the steel sheet surface treatment agent in Comparative Example 1 is excellent in the heat yellowing resistance, but is not satisfactory at all in the chemical resistance and corrosion resistance.

Comparative Example 2 is an example in which methanol having the boiling point which is outside of the range defined in the present invention (boiling point: 65.4°C) was used as a terminator. It has been confirmed that the coating film obtained using the steel sheet surface treatment agent in Comparative Example 2 is not satisfactory at all in the heat yellowing resistance and corrosion resistance, and further is not satisfactory in the chemical resistance.

Comparative Example 3 is an example in which polypropylene glycol having the number average molecular weight which is outside of the range defined in the present invention (number average molecular weight: 650) was used as a terminator. It has been confirmed that the coating film obtained using the steel sheet surface treatment agent in Comparative Example 3 is not satisfactory at all in the heat yellowing resistance, chemical resistance, and corrosion resistance.

Comparative Example 4 is an example in which no terminator was used. It has been confirmed that the coating film obtained using the steel sheet surface treatment agent in Comparative Example 4 is excellent in the chemical resistance (alkali resistance), but is not satisfactory at all in the heat yellowing resistance.

## Claims

1. A steel sheet surface treatment agent, comprising an aqueous urethane resin composition obtained by dispersing in (C) an aqueous medium a urethane resin obtained by reacting (A) a urethane prepolymer having an isocyanate group and (B) a terminator containing (b1) an alcohol solvent,
wherein the urethane prepolymer (A) is obtained by reacting (a1) a polyol and (a2) a polyisocyanate containing an aromatic polyisocyanate,
wherein the polyol (a1) includes a polyether polyol,
wherein the alcohol solvent (b1) includes hexanol, heptanol, octanol, nonanol, undecanol, 1,2-propanediol, 1,3-propanediol, 1,2-butanediol, 1,3-butanediol, 1,4-butanediol, 2,3-butanediol, 1,2-pentanediol, 1,5-pentanediol, 1,2-hexanediol, or 1,6-hexanediol,
wherein the boiling point of the alcohol solvent (b1) is in the range of from 150 to 350°C,
wherein the number average molecular weight of the alcohol solvent (b1) is 500 or less, and
wherein the content of the alcohol solvent (b1) is in the range of from 0.1 to 10 parts by mass relative to 100 parts by mass of the urethane prepolymer (A).

2. The steel sheet surface treatment agent according to claim 1, wherein the alcohol solvent (b1) is at least one alcohol solvent selected from the group consisting of 1,2-propanediol, 1,2-butanediol, and 1,3-butanediol.

3. The steel sheet surface treatment agent according to claim 1, wherein the aromatic polyisocyanate is at least one polyisocyanate selected from the group consisting of toluene diisocyanate, diphenylmethane diisocyanate, and xylylene diisocyanate.

4. The steel sheet surface treatment agent according to claim 1, wherein the isocyanate group equivalent of the urethane prepolymer (A) is 3,500 g/eq. or more.

5. A steel sheet comprising a coating film of the steel sheet surface treatment agent according to any one of claims 1 to 4.

6. A method for producing an aqueous urethane resin composition, comprising:
the first step of reacting a polyol (a1) and a polyisocyanate (a2) containing an aromatic polyisocyanate to obtain a urethane prepolymer (A) having an isocyanate group;
the second step of reacting the obtained urethane prepolymer (A) and a terminator (B) containing an alcohol solvent (b1) at 55°C or higher, and dispersing the resultant urethane resin in an aqueous medium (C) to obtain an aqueous dispersion of the urethane resin; and
the third step of subjecting the aqueous dispersion of the urethane resin to aging and/or solvent removal,
wherein the polyol (a1) includes a polyether polyol,
wherein the alcohol solvent (b1) is at least one of hexanol, heptanol, octanol, nonanol, undecanol, 1,2-propanediol, 1,3-propanediol, 1,2-butanediol, 1,3-butanediol, 1,4-butanediol, 2,3-butanediol, 1,2-pentanediol, 1,5-pentanediol, 1,2-hexanediol, and 1,6-hexanediol,
wherein the alcohol solvent (b1) exhibits a boiling point in the range of from 150 to 350°C,
wherein the number average molecular weight of the alcohol solvent (b1) is 500 or less, and
wherein the content of the alcohol solvent (b1) is in the range of from 0.1 to 10 parts by mass relative to 100 parts by mass of the urethane prepolymer (A).

## Patentansprüche

1. Oberflächenbehandlungsmittel für Stahlblech, umfassend eine wässrige Urethanharzzusammensetzung, erhalten durch Dispergieren, in (C) einem wässrigen Medium, eines Urethanharzes erhalten durch Umsetzen von (A) einem Urethan-Prepolymer mit einer Isocyanatgruppe und (B) einem Terminator, enthaltend (b1) ein Alkohollösungsmittel,
wobei das Urethan-Prepolymer (A) erhalten wird durch Umsetzung von (a1) einem Polyol und (a2) einem Polyisocyanat, das ein aromatisches Polyisocyanat enthält,
wobei das Polyol (a1) ein Polyetherpolyol einschließt,
wobei das Alkohollösungsmittel (b1) Hexanol, Heptanol, Octanol, Nonanol, Undecanol, 1,2-Propandiol, 1,3-Propandiol, 1,2-Butandiol, 1,3-Butandiol, 1,4-Butandiol, 2,3-Butandiol, 1,2-Pentandiol, 1,5-Pentandiol, 1,2-Hexandiol oder 1,6-Hexandiol umfasst,
wobei der Siedepunkt des Alkohollösungsmittels (b1) im Bereich von 150 bis 350° C liegt,
wobei das zahlenmittlere Molekulargewicht des Alkohollösungsmittels (b1) 500 oder weniger beträgt, und
wobei der Gehalt des Alkohollösungsmittels (b1) im Bereich von 0,1 bis 10 Masseteilen, bezogen auf 100 Masseteile des Urethanprepolymers (A), liegt.

2. Oberflächenbehandlungsmittel für Stahlblech nach Anspruch 1, wobei das Alkohollösungsmittel (b1) mindestens ein Alkohollösungsmittel ist, das aus der Gruppe ausgewählt ist, die aus 1,2-Propandiol, 1,2-Butandiol und 1,3-Butandiol besteht.

3. Oberflächenbehandlungsmittel für Stahlblech nach Anspruch 1, wobei das aromatische Polyisocyanat mindestens ein Polyisocyanat ist, das ausgewählt ist aus der Gruppe bestehend aus Toluoldiisocyanat, Diphenylmethandiisocyanat und Xylylendiisocyanat.

4. Oberflächenbehandlungsmittel für Stahlblech nach Anspruch 1, wobei das Isocyanatgruppen-Äquivalent des Urethan-Prepolymers (A) 3.500 g/Äq. oder mehr beträgt.

5. Stahlblech, das einen Beschichtungsfilm aus dem Oberflächenbehandlungsmittel für Stahlbleche nach einem der Ansprüche 1 bis 4 aufweist.

6. Verfahren zur Herstellung einer wässrigen Urethanharzzusammensetzung, umfassend:
den ersten Schritt der Umsetzung eines Polyols (a1) und eines Polyisocyanats (a2), das ein aromatisches Polyisocyanat enthält, um ein Urethan-Prepolymer (A) mit einer Isocyanatgruppe zu erhalten;
den zweiten Schritt der Umsetzung des erhaltenen Urethan-Prepolymers (A) und eines Terminators (B), der ein Alkohollösungsmittel (b1) enthält, bei 55° C oder höher, und Dispergieren des resultierenden Urethanharzes in einem wässrigen Medium (C), um eine wässrige Dispersion des Urethanharzes zu erhalten; und
der dritte Schritt, bei dem die wässrige Dispersion des Urethanharzes einer Alterung und/oder einem Lösungsmittelentzug unterzogen wird,
wobei das Polyol (a1) ein Polyetherpolyol einschließt,
wobei das Alkohollösungsmittel (b1) mindestens eines von Hexanol, Heptanol, Octanol, Nonanol, Undecanol, 1,2-Propandiol, 1,3-Propandiol, 1,2-Butandiol, 1,3-Butandiol, 1,4-Butandiol, 2,3-Butandiol, 1,2-Pentandiol, 1,5-Pentandiol, 1,2-Hexandiol und 1,6-Hexandiol ist,
wobei das alkoholische Lösungsmittel (b1) einen Siedepunkt im Bereich von 150 bis 350° C aufweist,
wobei das zahlenmittlere Molekulargewicht des Alkohollösungsmittels (b1) 500 oder weniger beträgt, und
wobei der Gehalt des Alkohollösungsmittels (b1) im Bereich von 0,1 bis 10 Masseteilen, bezogen auf 100 Masseteile des Urethanprepolymers (A), liegt.

## Revendications

1. Agent de traitement de surface pour tôles d'acier, comprenant une composition aqueuse de résine uréthane obtenue par dispersion dans (C) un milieu aqueux d'une résine uréthane obtenue par réaction (A) d'un prépolymère uréthane ayant un groupe isocyanate et (B) d'un terminateur contenant (b1) un solvant alcoolique,
dans lequel le prépolymère uréthane (A) est obtenu par réaction (a1) d'un polyol et (a2) d'un polyisocyanate contenant un polyisocyanate aromatique,
dans lequel le polyol (a1) comprend un polyol de polyéther,
dans lequel le solvant alcool (b1) comprend l'hexanol, l'heptanol, l'octanol, le nonanol, l'undécanol, le 1,2-propanediol, le 1,3-propanediol, le 1,2-butanediol, le 1,3-butanediol, le 1,4-butanediol, le 2,3-butanediol, le 1,2-pentanediol, le 1,5-pentanediol, le 1,2-hexanediol, ou le 1,6-hexanediol,
dans lequel le point d'ébullition du solvant alcoolique (b1) est compris entre 150 et 350 C°,
dans lequel le poids moléculaire moyen en nombre du solvant alcoolique (b1) est inférieur ou égal à 500, et
dans lequel la teneur en solvant alcoolique (b1) est comprise entre 0,1 et 10 parties en masse par rapport à 100 parties en masse du prépolymère uréthane (A).

2. Agent de traitement de surface des tôles d'acier selon la revendication 1, dans lequel le solvant alcoolique (b1) est au moins un solvant alcoolique choisi dans le groupe constitué par le 1,2-propanediol, le 1,2-butanediol et le 1,3-butanediol.

3. Agent de traitement de surface des tôles d'acier selon la revendication 1, dans lequel le polyisocyanate aromatique est au moins un polyisocyanate choisi dans le groupe constitué par le diisocyanate de toluène, le diisocyanate de diphénylméthane et le diisocyanate de xylylène.

4. Agent de traitement de surface des tôles d'acier selon la revendication 1, dans lequel l'équivalent en groupe isocyanate du prépolymère uréthane (A) est de 3 500 g/éq. ou plus.

5. Tôle d'acier comprenant un film de revêtement de l'agent de traitement de surface de tôle d'acier selon l'une des revendications 1 à 4.

6. Méthode de production d'une composition aqueuse de résine d'uréthane, comprenant :
la première étape de faire réagir un polyol (a1) et un polyisocyanate (a2) contenant un polyisocyanate aromatique pour obtenir un prépolymère uréthane (A) ayant un groupe isocyanate ;
la deuxième étape de faire réagir le prépolymère uréthane (A) obtenu et un terminateur (B) contenant un solvant alcoolique (b1) à 55° C ou plus, et de disperser la résine uréthane obtenue dans un milieu aqueux (C) pour obtenir une dispersion aqueuse de la résine uréthane ; et
la troisième étape de soumettre la dispersion aqueuse de la résine uréthane au vieillissement et/ou à l'élimination du solvant,
dans laquelle le polyol (a1) comprend un polyol de polyéther,
dans laquelle le solvant alcoolique (b1) est au moins l'un des suivants : hexanol, heptanol, octanol, nonanol, undécanol, 1,2-propanediol, 1,3-propanediol, 1,2-butanediol, 1,3-butanediol, 1,4-butanediol, 2,3-butanediol, 1,2-pentanediol, 1,5-pentanediol, 1,2-hexanediol, et 1,6-hexanediol,
dans laquelle le solvant alcoolique (b1) présente un point d'ébullition compris entre 150 et 350 °C,
dans laquelle le poids moléculaire moyen en nombre du solvant alcoolique (b1) est inférieur ou égal à 500, et
dans laquelle la teneur en solvant alcoolique (b1) est comprise entre 0,1 et 10 parties en masse par rapport à 100 parties en masse du prépolymère uréthane (A).
